(19) Europäisches Patentamt
European Patent Office
Office européen des brevets

(11) Veröffentlichungsnummer: **0 029 545**
**A1**

# (12) EUROPÄISCHE PATENTANMELDUNG

(21) Anmeldenummer: **80106947.7**

(22) Anmeldetag: **11.11.80**

(51) Int. Cl.³: **C 09 B 43/28**
D 06 P 3/06
//C09B31/06

(30) Priorität: **24.11.79 DE 2947468**

(43) Veröffentlichungstag der Anmeldung:
**03.06.81 Patentblatt 81/22**

(84) Benannte Vertragsstaaten:
**CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Wiesel, Manfred, Dr.**
**Am Steinberg 27**
**D-5090 Leverkusen 1(DE)**

(72) Erfinder: **Weichbrodt, Kurt, Dr.**
**Reginharstrasse 26**
**D-5060 Bergisch-Gladbach 1(DE)**

(54) **Disazofarbstoff, Verfahren zu seiner Herstellung sowie seine Verwendung.**

(57) Disazofarbstoff, der in Form der freien Säure der Formel

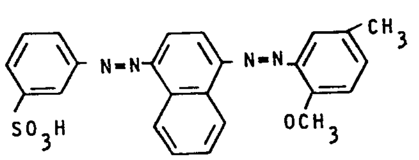

entspricht, seine Herstellung sowie seine Verwendung zum Färben und Bedrucken von Polyamidmaterialien.

EP 0 029 545 A1

0029545

BAYER AKTIENGESELLSCHAFT 5090 Leverkusen, Bayerwerk
Zentralbereich
Patente, Marken und Lizenzen PG/Kü-c

23. Nov. 1979

# Disazofarbstoff, Verfahren zu seiner Herstellung sowie seine Verwendung

Die Erfindung betrifft einen Disazofarbstoff, der in Form der freien Säure der Formel

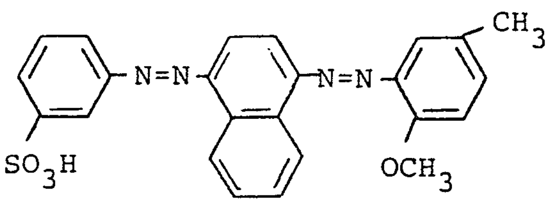

(I)

entspricht.

Der Farbstoff wird beispielsweise hergestellt, indem man die nach bekannten Verfahren erhältliche Verbindung, welche in Form der freien Säure der Formel

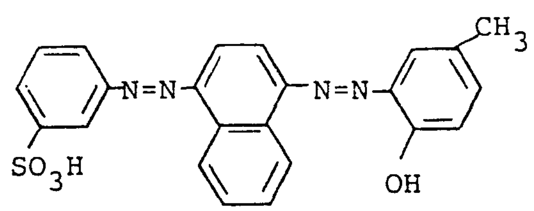

(II)

entspricht,

mit geeigneten Methylierungsmitteln wie beispielsweise Methylchlorid, Methylbromid oder Dimethylsulfat in wässrigem oder wässrig-organischem Milieu alkyliert.

Als organische Komponenten der Alkylierungslösung kommen Alkohole wie beispielsweise Methanol, Ethanol, Isopropanol, Butanol, Ethylenglykol oder Ethylglykol in Betracht.

Man arbeitet bei Temperaturen zwischen 20° und 120°, vorzugsweise bei 70 - 90° und gegebenenfalls Drücken (bei Alkylhalogeniden) zwischen 4 und 10 bar.

Der neue Farbstoff eignet sich zum Färben und Bedrucken von Polyamidmaterialien. Besonders geeignet ist er zum Färben von Wolle und synthetischen Polyamiden wie Poly-ε-caprolactam oder Kondensationsprodukten aus Adipinsäure und Hexamethylendiamin.

Zum Färben wird bevorzugt das Natriumsalz des Farbstoffs (I) eingesetzt.

Auf Polyamid erhält man orange Färbungen mit sehr guter Licht- und Naßechtheit.

Herstellungsbeispiel

0,2 Mol des feuchten Vorproduktes der Formel (II) werden in einer Mischung aus 400 ml Wasser und 200 ml Isopropanol verrührt und mit 40 ml einer 50%igen Natronlauge alkalisch gestellt. Man heizt auf 80° und läßt innerhalb von einer Stunde 88 g Dimethylsulfat zulaufen. Nach zweistündigem Nachrühren bei 80° destilliert man mit direktem Wasserdampf das Isopropanol ab. Nach dem Abkühlen auf 40° stellt man durch Zugabe von Wasser eine Dichte von 1,09 ein. Bei 40° wird der Farbstoff abgesaugt und mit 100 ml einer 5 %igen Kochsalzlösung nachgewaschen.

Färbebeispiel

0,1 g des nach obiger Vorschrift hergestellten Farbstoffs werden in 100 ml Wasser heiß aufgelöst, 5 ml 10 %ige Ammoniumacetatlösung zugesetzt und auf ein Volumen von 500 ml mit Wasser verdünnt. Man geht mit 10 g Polyamidfaser in das Färbebad ein, bringt das Färbebad innerhalb von 20 Minuten zum Kochen, setzt 4 ml 10 %ige Essigsäure zu und hält eine Stunde auf Kochtemperatur. Danach wird gespült und bei 70 - 80° getrocknet. Man erhält eine Färbung in orangem Ton mit sehr guter Licht- und Naßechtheit.

Patentansprüche

1. Disazofarbstoff, der in Form der freien Säure der Formel

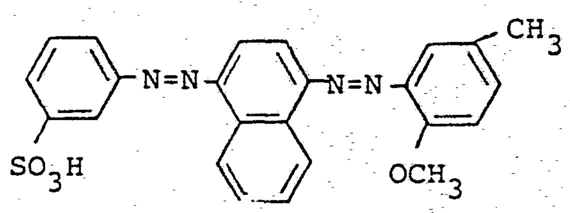

(I)

entspricht.

2. Verfahren zur Herstellung des Disazofarbstoffs gemäß Anspruch 1, dadurch gekennzeichnet, daß man die Verbindung, die in Form der freien Säure der Formel

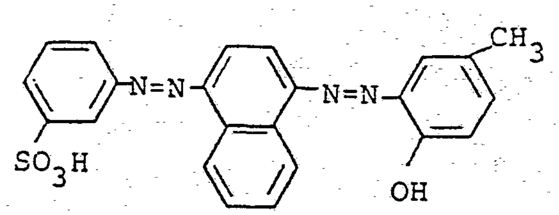

(II)

entspricht, methyliert.

3. Verfahren zum Färben und Bedrucken von Polyamidmaterialien, dadurch gekennzeichnet, daß man den Farbstoff gemäß Anspruch 1 verwendet.



BAD ORIGINAL

0029545

Europäisches Patentamt

Nummer der Anmeldung
EP 80 10 6947

# EUROPÄISCHER RECHERCHENBERICHT

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | US - A - 3 951 590 (STUDER)<br>* Spalte 1, Formel V; Spalte 2, Absatz 3 und Formel VII; Spalte 3, Beispiel 2 *<br>& DE - A - 1 794 389 (SANDOZ)<br>DE - A - 1 793 008 (SANDOZ)<br>-- | 1-3 | C 09 B 43/28<br>D 06 P 3/06<br>//C 09 B 31/06 |
| A | FR - A - 2 079 390 (BAYER)<br>* Seite 1, Formel III; Seite 3, Absatz 1; Seite 6, Zeilen 30-35 *<br>& DE - A - 2 006 261<br>-- | 1-3 | RECHERCHIERTE SACHGEBIETE (Int. Cl.³)<br>C 09 B 43/28<br>31/065<br>31/02<br>31/00<br>31/062 |
| A | FR - A - 2 111 275 (CROMPTON & KNOWLES)<br>* Seite 1, Zeilen 1-26 *<br>& DE - A - 2 150 864<br>----------- | 1-3 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 28-02-1981 | GREEN |